# EUROPEAN PATENT SPECIFICATION

(11) **EP 1 269 336 B1**
(45) Date of publication and mention of the grant of the patent: **06.09.2017**
(21) Application number: 01908095.1
(22) Date of filing: 27.02.2001
(51) Int. Cl.: G06F 17/30

(54) **SYSTEM AND METHOD OF MONITORING VIDEO AND/OR AUDIO CONFERENCING THROUGH A RAPID-UPDATE WEBSITE**
SYSTEM UND VERFAHREN ZUR ÜBERWACHUNG VON VIDEO- UND/ODER AUDIOKONFERENZEN DURCH EINE WEBSITE MIT SCHNELLER AKTUALISIERUNG
SYSTEME ET PROCEDE DE SURVEILLANCE DE VIDEO ET/OU D'AUDIO CONFERENCE PAR LE BIAIS D'UN SITE WEB A MISE A JOUR RAPIDE

(30) Priority: 02.03.2000 US 186417 P; 28.09.2000 US 675798
(43) Date of publication of application: 02.01.2003
(60) Divisional application: 10008066.2
(73) Proprietor: Polycom Israel Ltd., 49130 Petach Tikva (IL)
(72) Inventor: BONEH, Rami, 48057 Rosh Ha'ayin (IL); BIBY, Danny, 52371 Ramat Gan (IL); ELIRAZ, Zoe, Yavniel, 15225 (IL)
(74) Representative: Käck, Stefan
(86) International application number: PCT/IL2001/000184
(87) International publication number: WO 2001/065391

(56) References cited:
- WO-A-97/10558
- WO-A-98/37503
- US-A- 5 761 662
- US-A- 6 052 730
- US-A- 6 092 074
- US-A- 6 122 661
- US-B1- 6 226 792
- ANONYMOUS: "Stock Ticker - Urgent !!!" [Online] 21 December 1999 (1999-12-21), GOOGLE , XP002419383 macromedia.dreamweaver Retrieved from the Internet: URL:http://groups.google.com/group/macrome dia.dreamweaver/tree/browse_frm/thread/bfd 1828ba45d9754> [retrieved on 2007-02-08] * the whole document *
- ANONYMOUS: "stock ticker" [Online] 21 December 1999 (1999-12-21), GOOGLE , XP002419384 comp.infosystems.www.authoring.cgi Retrieved from the Internet: URL:http://groups.google.com/group/comp.in fosystems.www.authoring.cgi/tree/browse_fr m/thread/c0a2827de690ea2c> [retrieved on 2007-02-08] * the whole document *
- ANONYMOUS: "data packets to a browser running javascript" [Online] 5 October 1997 (1997-10-05), GOOGLE , XP002419385 compl.lang.javascript Retrieved from the Internet: URL:http://groups.google.com/group/comp.la ng.javascript/tree/browse_frm/thread/6d867 0ca20bab838> [retrieved on 2007-02-08] * the whole document *
- PALMER P J ET AL: "Web-based tools in support of life cycle engineering of telecommunications products" ELECTRONICS MANUFACTURING TECHNOLOGY SYMPOSIUM, 1997., TWENTY-FIRST IEEE/CPMT INTERNATIONAL AUSTIN, TX, USA 13-15 OCT. 1997, NEW YORK, NY, USA,IEEE, US, 13 October 1997 (1997-10-13), pages 134-139, XP010249717 ISBN: 0-7803-3929-0
- FRIESENHAHN B: "WRITING JAVASCRIPT APPLICATIONS" BYTE, MCGRAW-HILL INC. ST PETERBOROUGH, US, vol. 23, no. 2, February 1998 (1998-02), pages 59-60, XP000767988 ISSN: 0360-5280
- TESSIER T: "SHARING DATA BETWEEN WEB PAGE FRAMES USING JAVASCRIPT IMPLEMENTING A HIDDEN-FRAME TECHNIQUE" DR. DOBB'S JOURNAL, M&T PUBL., REDWOOD CITY, CA,, US, vol. 21, no. 5, 1 May 1996 (1996-05-01), pages 72,74-75,86, XP000575401 ISSN: 1044-789X
- MICROSOFT CORPORATION: "Netmeeting 2.1 - Overview" INTERNET CITATION, [Online] 5 November 1997 (1997-11-05), XP002423516 Retrieved from the Internet: URL:http://www.microsoft.com/technet/prodt echnol/netmting/reskit/netmtg2/ chpt1.mspx> [retrieved on 2007-02-28]
- DAVIS A W: "MICROSOFT'S NETMEETING 2.0: WHY DESKTOP VIDEOCONFERENCING'S RALLYING" ADVANCED IMAGING, PTN PUBLISHING CO., MELVILLE, NY, US, July 1997 (1997-07), pages 44,46-48, XP000770947 ISSN: 1042-0711
- "WINDOWS NETMEETING - FEATURES" INTERNET CITATION, [Online] 17 June 1999 (1999-06-17), XP002245623 Retrieved from the Internet: URL:http://www.microsoft.com/windows/NetMe eting/Features/default.ASP> [retrieved on 2003-06-26]
- STROM J: "Netmeeting" INTERNET CITATION, [Online] 17 November 1999 (1999-11-17), XP002280571 Retrieved from the Internet: URL:http://www.gap.g-ming.net.uk/NetMeetin g3.html> [retrieved on 2004-05-12]

## Description

### TECHNICAL FIELD

This invention relates to the field of Internet technologies and, more particularly, to the controlling and monitoring of video and/or audio conferencing through the Internet.

### BACKGROUND

In the last several years, the World Wide Web, or the Internet, has been blended with a variety of other technologies to create new, innovative, and globally accessible applications. Such blended technologies include on-line airline reservation systems, weather monitoring systems, catalog purchasing, stock trading, as well as many others. An example of such a blended technology developed by Accord Telecommunications Ltd., now Polycom Israel Ltd., the assignee of the present invention, monitors and controls a video conference through the use of a website interface.

Utilizing existing technology to establish a video conference, a service provider is enlisted to reserve, set up, monitor and control the video conference. In this configuration, an operator must either attend the conference, monitor the conference, or at least be in contact via telephone, or some other means, with one of the participants of the video conference. The role of the operator is to monitor the video conference and resolve any problems that may arise. In addition, the operator can control various aspects of the video conference, such as, muting, video configurations, entrance and exits to the video conference, or the like. For example, if one of the participants in a video conference wants to mute another participant in the video conference, the initiating participant must notify the operator. The operator then mutes the other participant and provides an indicator to the other participants of such. Simple control over a video conference such as this requires the presence and attention of the operator.

The use of an operator within a video conference results in increasing the cost for video conferencing services. For each active video conference, sufficient operator support must be available. If a single operator is required to control multiple video conferences, the quality of service may suffer during busy or peak operational times. If a separate operator is assigned to each video conference to ensure a high-quality of performance, the cost of the video conferencing service may escalate.

In addition, in state of the art video conferencing technologies, the participants in a video conference may not be automatically made aware of the status of the video conference. For example, a participant may not know if another participant is joining into the conference or if a participant has muted himself via his or her terminal. In the current art video conferencing technologies, only the operator has access to such information. Thus, there is a need in the art for a system and method to allow individual participants in a video conference to obtain status information pertaining to the video conference and the other participants in the video conference. It is desirable to provide a solution which allows the individual participants in a video conference to control and/or obtain status information without requiring the intervention of an operator. The solution presented in the present invention is to utilize an Internet based monitoring and control system to replace some or all of the functions of the operator. Thus, there is a need in the art for a system and a method to blend video conferencing technology with Internet or network technology.

Often times, when blending existing technologies, short comings or incompatibilities arise that require innovative engineering to overcome. The use of a networked based monitoring and control system for video conferences encounters such incompatibilities. The most apparent incompatibility in the video conferencing example arises based on the need for continuously providing updated information to the participants of a video conference. The status information pertaining to a video conference can change rapidly and often. Obtaining and tracking this status information in real-time can be processor intensive. Thus, there is a need in the art for a system and method that can receive and rapidly process the status information available during a video conference.

Internet technologies were not developed for the purpose of providing and rapidly updating information. Rather, the Internet was designed to extract vast amounts of generally static information. Nonetheless, several attempts have been made to utilize the Internet in a manner to support monitoring or receiving information that is periodically updated, or more succinctly stated, to provide updateable web pages.

The most rudimentary technique to provide updateable web pages is the refresh function. Typically, state of the art web browsers are equipped with a function or button which, when invoked, will cause the browser to reload updated information from a displayed website. This process involves reloading the data from a web server without having any prior knowledge as to whether the data has changed or not. This technique is inadequate for many applications because it requires the viewer of the website to continuously invoke the refresh function to obtain updated information. If no new information is available, time and bandwidth are needlessly expended.

Another technique to provide updateable web pages is to automatically invoke the refresh function. This technique eliminates the requirement for the viewer to manually and continuously invoke the refresh button; however similar to the previous technique, this automated technique is inadequate in that it wastes a significant amount of time and bandwidth. The refresh function is invoked blindly, because the viewer does not know if updated information is available or not. Thus, the refresh function may be invoked multiple times without providing any updated information. Therefore there is a need in the art for a system and a method to provide updated information in an Internet environment that minimizes the waste of time and bandwidth by only providing information when it has actually been updated or modified.

Another advanced technique for providing updateable web pages is to include a Java applet on the viewer's page. An applet invokes processing on the viewer's computer system. In operation, the applet opens a TCP/IP socket to the server in order to send and receive data from the server. Upon receiving the information from the server, the applet updates the web page with the new information. This technique for providing updateable web pages has several disadvantages. One such disadvantage is that this technique requires the opening of an additional TCP port on the firewall of the service provider. This opens the server to additional security risks. Another disadvantage is that large applets that include a significant amount of code take a substantial amount of time to load on the viewer's computer system. In addition, in some sites the browser does not support Java applet. Yet another disadvantage of this technique is that when transferring data using TCP/IP, the serialization and the de-serialization of the data has to be programmed (unless the server was written in Java). For instance, if the data received is a long string with delimiters to parse the data and extract necessary information, code must be written to perform the task. However, the structure of the data would be known to a Java script.

Thus, there is a need in the art for a system to provide updateable web pages that are not limited to the use of Java applets. There is also a need in the art for such a system to be compatible with a variety of web page types and to quickly update.

Therefore, it is clear that there is a need in the art for a system to provide updateable web pages that reduce or eliminate above-described problems. There is also a need in the art for such a system that can be used for monitoring and controlling a video conference without the need for operator intervention.

Therefore, it is clear that there is a need in the art for a system of monitoring video and/or audio conferencing through a rapid-update website.

WO 97/10558 A1 relates generally to information systems and more particularly to an information system which delivers continuously-updated and personalized information in a timely and convenient fashion.

US 5,761,662 A discloses a client/server model for information retrieval based upon a user-defined profile, for example, for the generation of an "electronic" newspaper which contains information of interest to a particular user.

In the article "Writing JavaScript Applications" by Bob Friesenhahn, the author describes some features and limitations of JavaScript and explains several tricks necessary to write application-caliber programs using JavaScript. For example, it is taught that by creating a main window that remains constant throughout the application's life, it is possible to store global variables for an application. Moreover, it is explained that a further severe limitation of JavaScript is that data can only be loaded by loading a URL into a window.

Further, NetMeeting is a VoIP and multi-point videoconferencing client included in many versions of Microsoft Windows. As explained in an article on Microsoft's website, NetMeeting 2.1 helps small and large organizations take full advantage of the global reach of the Internet or corporate Intranet for real-time communications and collaboration.

### SUMMARY OF THE INVENTION

The invention is defined in claim 1. Particular embodiments are set out in the dependent claims.

In particular, a system for updating a web page with rapidly changing information is disclosed. Although the system will be described within the context of monitoring and controlling a video conference through a website, those skilled in the art will appreciate that the described solution can also be utilized within a variety of environments and is most beneficial in monitoring and controlling applications having fast changing data. Utilizing the described solution, information can be updated with a delay of less than 500 ms.

In general, the present invention satisfies the aforementioned needs in the art by providing a system to monitor and control a multi-participant video/audio conference using the web, and to rapidly update information on a web page to provide current status information to the participants of the conference. Conference scheduling and reservation via an Internet based web server instead of using an operator has been described in a separate provisional patent application titled "A System and Method for Providing Reservationless Conferencing" filed in the United States Patent Office on March 1, 2000 by Accord Networks Ltd., and being assigned Serial No. 60/186,002. Using the present invention, a participant can view the status of a video-conference on-line and control the operation of the video conference in semi-real time without contacting an operator.

According to one aspect of the present invention there is provided a system for controlling the operation of a conference via a network. The conference is typically provisioned through a conference system controller or a Multipoint Control Unit ("MCU"). The system includes a web server and a client computer device. The web server includes a conference system controller interface to provide control information to the conference system controller and a network interface, typically to the Internet. The client computer device, which can be any computing device that includes a display, is communicatively coupled to the web server through the network interface. A web browser runs on the client computer device and is operative to receive a monitoring web page from the web server. The monitoring web page defines at least one control element which can be selected and/or actuated. When the control element is actuated, the web browser requests the web server to send a related control action to the conference system controller over the conference system controller interface.

In one embodiment, the web server includes a COM application and the web browser requests the web server to send a control action to the conference system controller by requesting the download of a command Microsoft's Active Server Pages ("ASP") page from the web server. The command ASP page includes a server script with a call to the COM application. Once the call to the COM application is placed, the COM application interfaces to the conference system controller over the conference system controller interface and performs the control action. The control action can include actions such as muting a participant, changing the display layout of a video conference, changing the zoom or pan of a participants camera, dropping a participant from the conference, or the like.

Thus, it will be seen by examining the figures, the detailed description associated with each figure, and the claims, that the present invention provides a useful, novel and non-obvious method for updating a web page with rapidly changing data and providing an Internet based solution for monitoring and controlling a video/audio conference.

### BRIEF DESCRIPTION OF THE DRAWINGS

Fig. 1 is a system diagram illustrating a prior art system for monitoring and controlling a video conference using an operator.
Fig. 2 is a system diagram illustrating an exemplary embodiment of the present invention utilized to control a video conference via a service provider controlled by a website.
Fig. 3 is a block diagram of an exemplary embodiment of the present invention providing an updateable website.
Fig. 4 is a flow diagram illustrating the steps of an exemplary embodiment of the present invention.
Fig. 5 is a flow diagram illustrating the operation of controlling a video conference event using an exemplary embodiment of the present invention.

### DETAILED DESCRIPTION OF THE INVENTION

Turning now to the figures in which like numeral represent like elements throughout the several views, exemplary embodiments of the present invention are described.

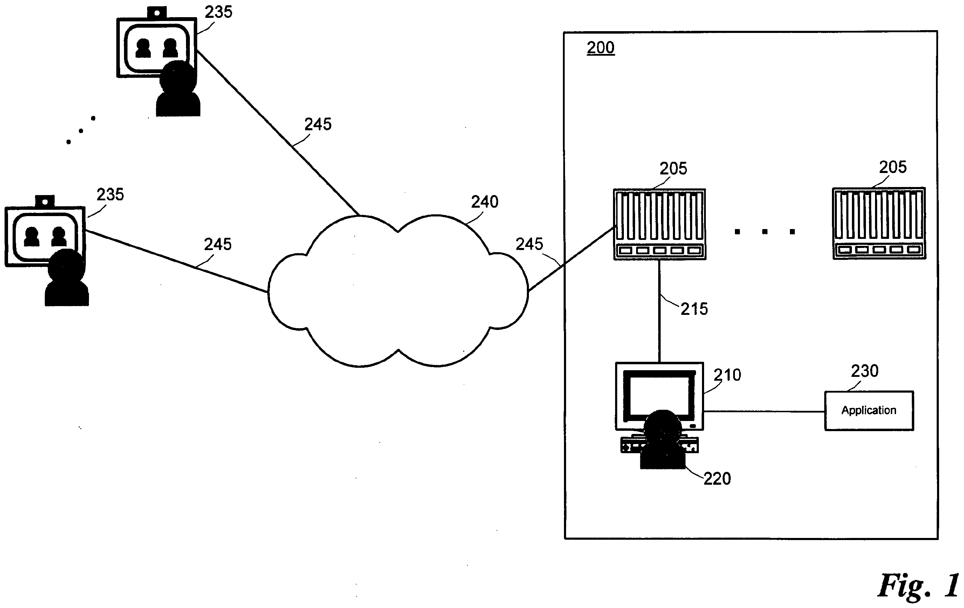

Fig. 1 is a system diagram illustrating a prior art system for monitoring and controlling a video conference. A video conferencing service provider provides the resources and management necessary to provide video conferencing services to various parties. The resources of the service provider 200 includes one or more Multipoint Control Units ("MCU") 205 that interface with an operator console 210 over an MCU/operator-console interface 215. In this prior art system, an operator 220 is required for setting up, monitoring, providing status updates and tearing down video conferences.

The MCU 205 provides the central controlling functions, switching and routing for the video conferencing system. The MCU 205 manages the allocation of conferencing channels, processes the video, audio, control and data signals exchanged during a video conference and receives several channels from access ports. The MCU 205 is typically located in a node of a network, or in a terminal connected to the operator console via a network. However, the MCU 205 may also be co-located with the operator console 210 or the MCU 205 and the operator console 210 may even be integrated onto a single platform. It should be understood by those skilled in the art that the operations of the MCU 205 could be performed in a variety of configurations including hardware, software, or a hybrid of both hardware and software. According to certain criteria, the MCU processes audiovisual and data signals and distributes them to connected channels. An example of an MCU is the MGC-100 available from Polycom Israel Ltd., the assignee of the present invention. Additional information about the MGC-100 MCU can be obtained by accessing the Internet address of www.polycom.com.

In an exemplary embodiment, the MCU/operator-console interface 215 is implemented over a TCP/IP Internet connection; however, it should be understood that this interface can take on a variety of forms including any of a variety of wired, wireless, optical or networked connections.

An operator 220 controls and operates each MCU 205 through the use of the operator-console 210. The MCU 205 interfaces with multiple client terminals 235 through a network 240 which may include the Internet, an intranet, an ATM network, ISDN or any of a variety of interconnection means that provide sufficient bandwidth for bi-directional transmission of audio and/or video information. The MCU 205 and each client terminal 235 connects to the network 240 over a network access 245.

In a typical system, the MCU manager application 230 may be a Win32 application connected via a TCP/IP connection to the MCU 205. The Win32 application is an application that runs on a computer running one of the available Windows operating systems. A terminal 235 in this setting is an endpoint on a network, capable of providing real-time, two-way audio, visual and/or data communication with other terminals or an MCU 205. This communication consists of control signals, indicators, audio, and moving color video pictures and/or data between the two terminals. A terminal 235 may provide speech only, speech and data, speech and video, or speech, data and video. A more detailed definition of a terminal can be found in the ITU standards H.320, H.321 and H.323. In current state of the art systems, the MCU manager application 230 is used to enable the monitoring and control a video conference.

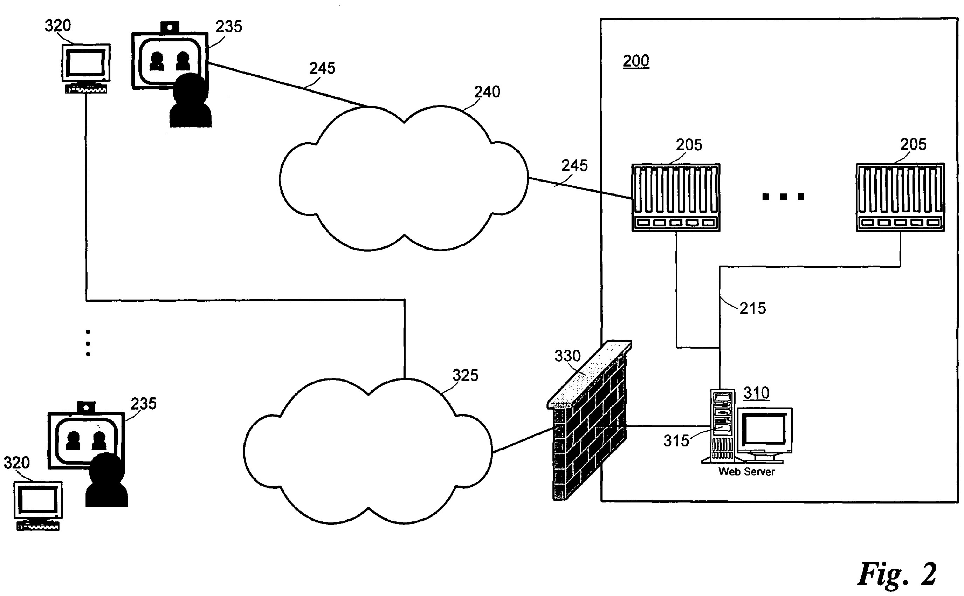

Fig. 2 is a system diagram illustrating an exemplary embodiment of the present invention wherein a website is utilized to control a video conference via a service provider rather than an operator. In the exemplary embodiment of the present invention, monitoring and control of a video conference is performed through a web server 310 hosting a website 315. Every permitted participant in a video conference, or even permitted users that are not included in a video conference, can log into the web server 310 to monitor and control a video conference. One or more participants log into the web server 310 through the use of a web browser compatible computer device 320 connected to the web server 310 through a wide area network 325 such as the Internet, or a local area network, such as an intranet operating within an office building or the like. Once logged into the web server 310, the participant may monitor and control a video conference. The computer device 320 running the web browser can be synonymous to the participant terminals 235, or the computer device 320 can be a separate device such as a personal computer, hand held device, or the like. The computer devices 320, operating in conjunction with the web server 310 and the website 315, replace the operator 220, the operator console 210 and the MCU manager application 230 illustrated in Fig. 1.

In an exemplary embodiment, a Hyper Text Transfer Protocol ("HTTP"), used to send and receive data between web browsers and a web server, provides a connection between the web server 310 and the web browsers running on each participant's computer device 320. Typically, to provide some level of security, a firewall 330 will be used to control access to the Service Provider **200** LAN. A firewall is a system that protects a local area network that is connected to the Internet from unauthorized access. One embodiment of the present invention uses the HTTP port only which is usually open in most of the firewall Installation.

The system illustrated in Fig. 2 provides an exemplary environment for various embodiments of the present invention. One such embodiment of the present invention is to provide the ability to monitor and control a video conference from the participant's or the client computer device 320. The typical parameters of a video conference that can be controlled include, but are not limited to, muting, connecting and disconnecting participants, changing the conference video layout, changing the conference end-time, etc. The web browser running on the client computer device 320 shows the state of the conference. The conference state includes the number of connected participants, the participant's mute state, the video layout of the conference, etc. The data pertaining to this state of the conference is updated online. Utilizing the present invention, the delay associated with updating the conference state should be less than one second since the state of the conference changes rapidly. This update timing is similar to the timing available utilizing the MCU manager application 230 described in conjunction with Fig. **1****.**

One aspect of the present invention is providing a web page that can update rapidly without the need for a user to actuate a refresh button on the page or reload the page to obtain current status information. In an exemplary embodiment, the web server 310 is installed on an NT server running Microsoft's Internet Information Server ("IIS") version 4 or greater or Windows 2000 Server with IIS ver. 5.or greater. The web server 310 includes Microsoft's Active Server Pages ("ASP") written by Accord, HTML pages and an application with Microsoft's Component Object Model ("COM") interface. The application with the COM interface will be hereinafter referred to as the COM application.

Those skilled in the art will be aware that Microsoft's COM technology is a binary protocol used to communicate between software components. This technology enables an application (including a script file) to call functions within another application, even if the applications were written in different programming languages.

A basic Internet or intranet based website includes a server with an HTTP application and one or more web pages. A web page is a file that includes Hyper Text Markup Language ("HTML") formatted text content and/or graphic images. HTML is the basic system used for presenting information over the Internet. When a user enters the Internet address for a website, or a Universal Resource Locator ("URL") address, into a web browser, the Internet network locates the web server associated with the particular URL. A URL specifies the location and name of an Internet resource such as a website or an HTML web page. A web page at the entered URL is downloaded to the user's browser using the HTTP protocol. The browser interprets the HTML information and transforms and displays the downloaded data as a visual web page. The HTML based web page may include formatted text, pictures, graphics, push buttons and other simple Graphical User Interface ("GUI") components. The web page may also provide the ability for the user to enter and transmit data to the server hosting the web page. Those skilled in the art are familiar with HTML programming techniques, as well as web page and website construction techniques.

Along with the HTML information, a web page can include one or more client scripts. A client script is a program module that can be executed under the control of a browser in response to occurrence of particular events. For example, a web page can define an HTML push button to be displayed on the monitor of the client computer device 320 and that is associated with a client script. When the user actuates the push button (i.e., by moving the mouse cursor over the push button and pressing the left mouse button) the browser triggers the client script to run. The client script can, for example, change the push button color to indicate that the push button has been actuated or invoke a variety of events. There are a variety of coding languages that may be used to write a client script. One of the most popular languages is the Java script language which is supported by most browsers. Those skilled in the art will be very familiar with programming in Java script as well as other applicable programming languages.

Another common element in web page design is Microsoft Active Server Pages ("ASP"). Microsoft active server pages are web pages that may include, instead of or along with the above mentioned elements (HTML information and client scripts), a server script. A server script is a script running on the web server machine before a web page is downloaded to the client computer device 320. The server script dynamically builds the downloaded web page by acquiring necessary information or data and creating any necessary HTML information or client scripts. The server script can also obtain information by placing function calls to other applications running on the server, which have a Component Object Module ("COM") interface. The web page downloaded after the server script has executed includes only client elements (HTML, client script) that the client browser knows how to process. The use of ASP files is supported in Internet Information Servers ("IIS") of version 4 Microsoft HTTP servers. Those skilled in the art are familiar with ASP programming techniques.

The ASP files in the web server 310 call functions via the COM application located in the web server 310. The COM application may utilize a TCP/IP connection, or other connection, to communicate with the MCU 205 or any other external components. The monitoring application of the present invention may include a monitoring web page to display status information and control functions. The monitoring web page down loads to the client computer device 320 and is an HTML file split into two panes. One pane of the monitoring web page is hidden, having a zero size, while the other pane is visible. In the visible pane, there is an HTML file containing objects that can be changed, modified or updated with client scripts. These changeable objects include, but are not limited to, Graphics Interchange Formatted objects ("GIFs"), HTML edit boxes, or any other of a variety of updateable or changeable objects. Those skilled in the art will be aware that a GIF is a common format to send pictures over the Internet. The visible pane reflects the updated data or current information on the monitor of the client computer device 320.

The URL for the hidden pane is set to access an ASP file on the web server 310. The ASP file includes a server script with an embedded client script. Both scripts are embedded within an pseudo endless loop. The hidden pane is referred to as a Smart Page. The script in the Smart Page uses a COM interface to call functions in the COM application, especially a function to get the conference status data. If the status data for the conference changes between successive retrievals, the COM application returns the updated data. If the data of the conference has not change, then the COM application returns an indicator that the data has not changed. For instance, a zero, null or some other known data type may be used to indicate that the conference data has not changed.

In the event that there is new data, the client script is built in the Smart Page to reflect the updated data. The client script is downloaded to the participant's computer device 320 and is executed by the client browser operating on the participant's computer device 320. The client script updates the visible page with the new information. For example, a client script such as "ShowMutedIcon(false)" is downloaded to the participant computer device 320 if the party has been unmuted or the ShowMutedIcon(true) is downloaded if the party has been muted. At the end of the pseudo endless loop the server script goes inactive (i.e., sleeps) for about 0.5 seconds, and then the loop is repeated.

A benefit of this method is that within the same loop on the Smart Page, the server script runs on the web server 310 and the client script runs on the client computer device 320. The loop keeps an open connection between the web server 310 and the client computer device 320. When a change occurs, the web server downloads only the Updating Script and not the full page. Monitoring the conference without keeping the open connection, involves reloading (or refreshing) the hidden-client's page every so often (i.e., approximately every 0.5 sec in an exemplary embodiment but not limited to this time frame). This would have created a load on the HTTP connection, and degradation in performance of the web browser is very noticeable to a user when a page is downloaded so frequently.

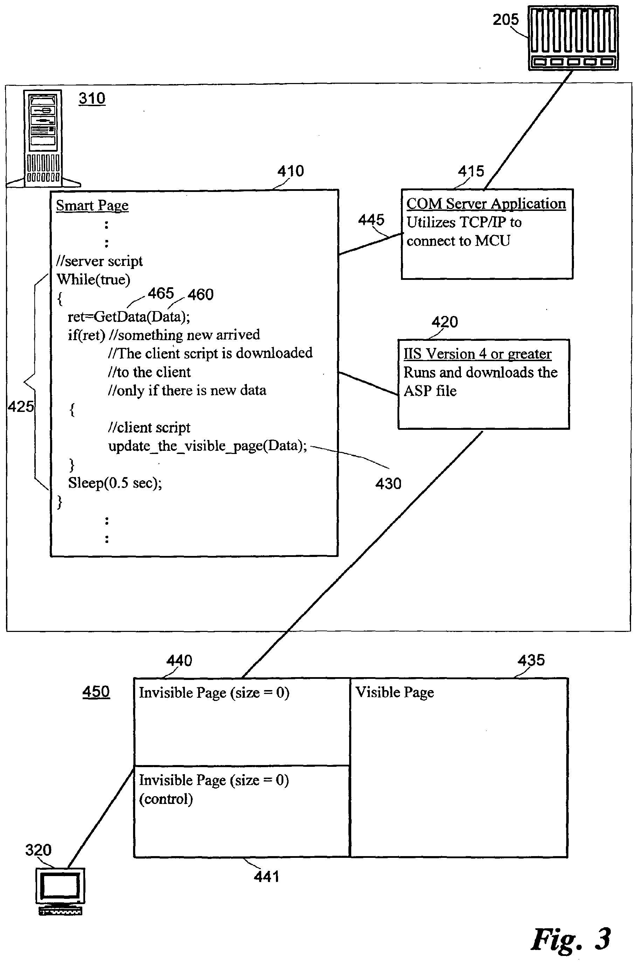

Fig. 3 is a functional diagram illustrating the components of an exemplary embodiment of the present invention providing an updateable web site. The web server 310 includes a Smart Page 410, a COM application 415 and runs HTTP server 420 having Microsoft IIS version 4 or later

The code that is written on the Smart Page 410 is a pseudo code that has "C" language or Java like syntax. The Smart Page 410 includes server script code 425, that runs in the web server 310 and client script code 430 embedded within the server script code 425. The client script 430 in the illustrated example includes the line: update_the_visible_page, which is client code intended to run on the client computer device 325. The line update_the_visible_page is not a real piece of code but rather, it stands for one or more Java script lines that, when executed, operate to update the HTML on the visible pane 435 of the monitoring web page 440 being displayed by the client browser on client computer device 320. The client script 430 is built and downloaded to the client computer device 320 only if there is new data. When executed, the server script 425 places a call to a COM application (e.g., Get Data 465) and receives a response (e.g., Data 460). The response is typically a string or a string pointer to a series of Java script commands built by the COM application. The Smart Page 410 using a COM protocol 445, communicates with the COM application 415 to query the status of one or more devices or program modules. The COM application 415, in response to the query, accesses or determines the requested status and provides this information to the Smart Page 410. For example, if the Smart Page 410 requests status information from an MCU 205, the COM application 415 will communicate with the MCU 205 to obtain the requested status, and then provide the results to the Smart Page 410. The HTTP server (Microsoft IIS version 4 or above) 420, runs the server script and, at the appropriate time, downloads the client script 430 to the client computer device 320.

The web browser running on the client computer device 320 includes a split web page 450 made up of an invisible pane 440 and a visible pane 435. The split web page 450 is downloaded to the web browser running on the client computer device 320 in response to a user entering the appropriate URL of the Smart Page 410. The client script 430, used to update the visible pane 435, is downloaded to the invisible pane 440. In an exemplary embodiment, a second invisible pane 441 may be used as the control section for entering commands and configuration information.

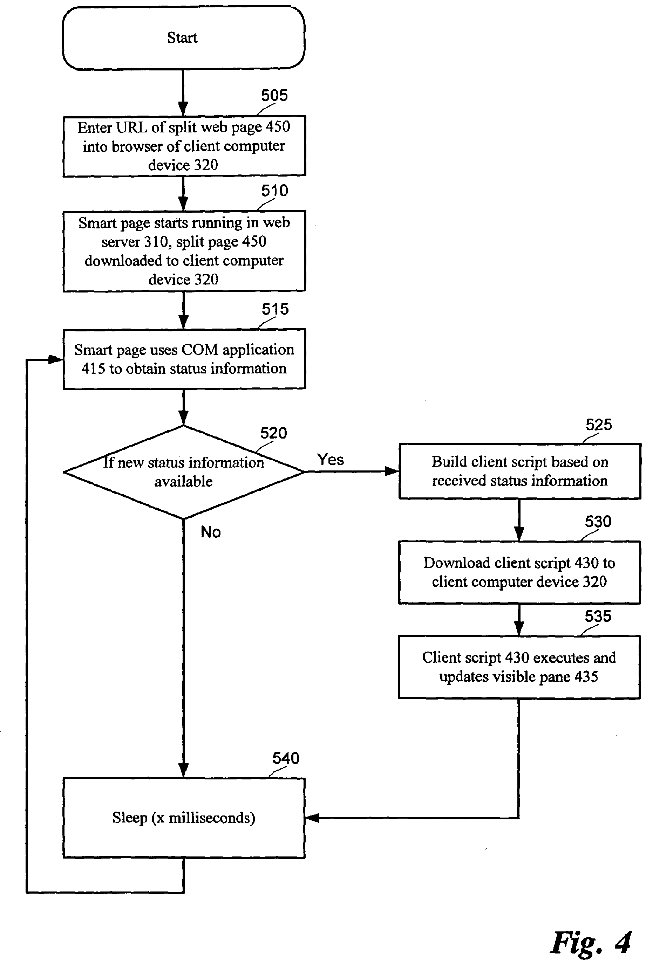

Fig. 4 is a flow diagram illustrating the steps of an exemplary embodiment of the present invention for monitoring a video conference event. Initially, participant A enters the URL of the split page or monitoring web page 450 into the browser on the client computer device 320 (505). As a result of entering the URL, the Smart Page 410 starts running the endless loop in the server 310 and the dual paned monitoring web page 450 is loaded onto the client computer device 320 (510).

In order to implement the updateable website of the present invention, several technical tasks must be accomplished. One such task is making the invisible page run in an endless loop. To create a loop running both on the web server 310 and on the client computer device 320, Java script tags should be placed inside the server script loop. One example of how to write such an ASP page follows. The server script is written in Visual Basic script and the client script in Java script.

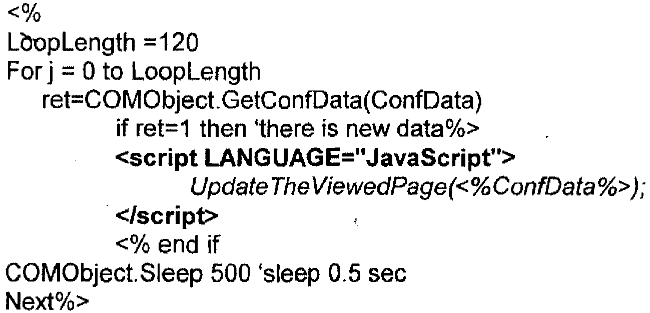

This script operates to enter a loop that will execute LoopLength times. For each pass through the loop, the COM application 415 is called to determine if the conference data has been updated and to obtain the updated conference data (515). The update conference data will be returned the variable ConfData (or ConfData may be a pointer to the conference data). If no new conference data is available, the server script will invoke a delay prior to returning to the beginning of the loop (540). However, if the conference data has been updated (520), then the client script (shown above in italics) is built within the Smart Page 410 in accordance with the new conference data (525). The client script is then loaded into the client computer device 320 (530). When the client script is fully loaded into the invisible pane 440 of the client computer device 325, the browser running on the client computer device 325 executes the client script. As a result of executing the client script, the visible pane 425 of the monitoring page 450 is updated with the new conference data (535). Finally, prior to ending this pass of the loop, the delay is performed (540). Thus, all the processing of the server script is performed within the web server 310 unless and until new conference data is available. At this time, the client computer device 325 will operate to update the visible pane 435 to reflect the new conference data. 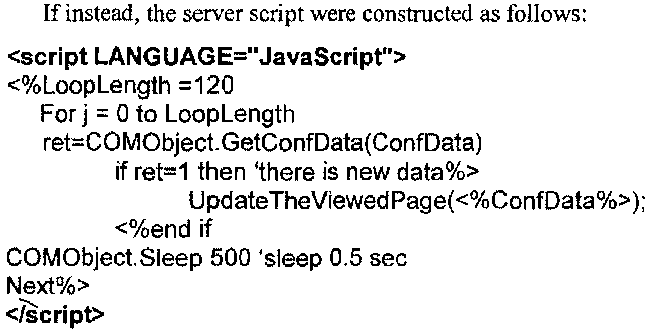 then the client script would have been downloaded only after finishing the loop. Therefore, the monitoring web page 450 would be updated only once a minute (depending on the "LoopLength" value) rather than once every 0.5 seconds.

Although the loop is referred to as an endless loop, in reality, the loop is not endless as shown in the above example. Instead, the loop should be structured to run for a certain period of time. In application, the certain period of time should, for all practical purposes, appear to be endless in comparison to the execution time of the loop. In an exemplary embodiment of the present invention, the endless loop takes approximately one minute; however, those skilled in the art will appreciate that the present invention could be implemented using a variety of loop lengths. Limiting the loop to a finite number of cycles, 120, prevents a situation in which the website locks up.

To renew the loop for continued monitoring of the conference, the Smart Page has to be reloaded (or refreshed). For example, the following Java Script can be added at the end of the Smart Page:
this.document.location.href = "SmartPage.asp".

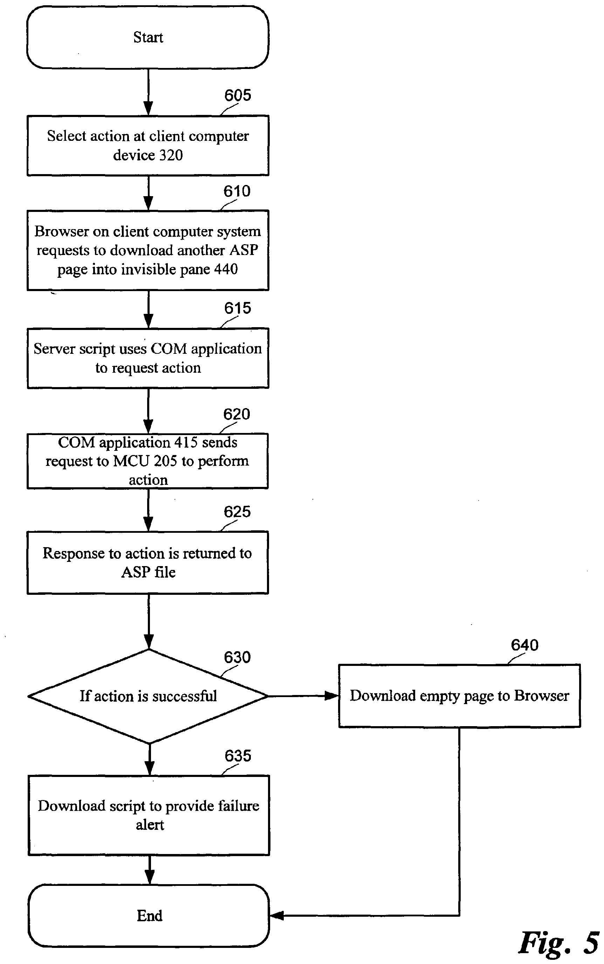

Fig. 5 is a flow diagram illustrating the steps of an exemplary embodiment of the present invention for controlling a video conference event that is being monitored in accordance with Fig. 4. The operation of this exemplary embodiment of the present invention to control a video conference event is illustrated by using one example application - muting a client terminal 230 using the monitoring web page.

The visible pane 435 of the monitoring web page 450 is displayed on the client computer device 230 of participant A. In an exemplary embodiment, the visible pane 435 may include one or more action buttons (i.e., a mute button). When participant A activates an action button (605), the browser operating on the client computer device 320 requests the web server 310 to download another ASP page into another invisible pane 440 of the client computer device 320 (610). Before downloading the ASP page, the server script in the page running on the web server 310 uses the COM interface to request the COM application 415 to mute the client terminal 235 of participant A (615). The COM application 415 sends the request to the MCU 205 (620). The success of the request is returned to the ASP file (625). If the operation fails (630), the ASP file downloads a client script to the client computer device 235 to alert of the failure (635). Otherwise, an empty page is downloaded to the client computer device 230 (640).

When the user wants to stop monitoring the conference (for example by clicking a link to another page), an alternate page has to be loaded instead of the Smart Page. This process will stop the endless reloading of the Smart Page.

The website should be separated into two sites in the IIS. The dual paned monitoring web page 450, the viewed pane 435 and other pages on the website should reside on one logical site, and the Smart Page on another logical site. This ensures the responsiveness of the website and enables the termination of the reloading loop. From the users point of view, this looks like one website with one URL but, in actuality, it is two web pages that are accessed using a single URL. The logical site with the Smart Page 410 should be configured in the IIS without buffering (usually this is the default).

By default the IIS server is configured in such a way that only 10 loops can run in parallel, so that when the eleventh participant enters the monitoring website, the participant will not be updated until one of the other ten finishes the loop in the Smart Page. To alleviate this problem, a parameter has to be added in the server registry. The parameter "ProcessorThreadMax" should be added to the key: HKEY_LOCAL_MACHINE\SYSTEM\CurrentControlSet\Services\W3SVC\ASP\Para metes

The value should be set to the number of users that will enter the conference control page simultaneously. In Windows 2000 Server this limitation is a lot higher.

### DEFINITIONS

Throughout this specification, the following terms are attributed with the following definitions:
"COM" is a Microsoft Component Object Model;
"URL" is Universal Resource Locator;
"MCU" is a Multipoint Control Unit;
"ASP" is a Microsoft Active Server Page;
"HTTP" is the Hyper Text Transfer Protocol;
"IIS" is a Microsoft Internet Information Server;
"HTML" is the Hyper Text Markup Language;
"GUI" is a Graphical User Interface; and
"GIF" is a Graphics Interchange Formatted object.

### CONCLUSION

The present invention provides the ability to monitor and control a video conference through a website. Rapidly changing data is provided to a client computer device by utilizing a looped server script having an embedded client script. The server script operates to identify and obtain updated information. The server script then modifies the client script based on the updated information. The modified client script is then downloaded to the client computer system to be executed. Upon execution, the client script updates the display of the client computer device. Thus, updated information is received and displayed by the client computer device without requiring the client computer device to directly monitor the event, or load extraneous information. As a result, a rapidly updated website is obtained that efficiently utilizes time and bandwidth. The present invention has been described in relation to particular embodiments which are intended in all respects to be illustrative rather than restrictive. Those skilled in the art will understand that the principles of the present invention may be applied to, and embodied in, various program modules for execution on differing types of computers and/or equipment, operating in differing types of networks, regardless of the application.

Alternate embodiments will become apparent to those skilled in the art to which the present invention pertains without departing from its scope. Accordingly, the scope of the present invention is described by the appended claims and supported by the foregoing description.

## Claims

1. A system for monitoring the status of a video conference via a network (240), the video conference being provisioned by a video conferencing system that includes a multipoint control unit (205), the multipoint control unit (205) being configured to manage the allocation of conferencing channels, to process the video, audio, control and data signals exchanged during the video conference and to receive several channels from access ports (235), the system comprising:
a web server (310) including a network interface and a multipoint control unit interface, the multipoint control unit interface being configured to receive status information from the multipoint control unit (205);
a client computer device (320) having a display and being communicatively connected to the web server (310) through the network interface;
a server script (425) running on the web server (310) in a continuous loop, the server script (425) being operative to request (615) and receive (620) status information from the multipoint control unit interface and when the status information is new, to generate (525) a client script (430) based, at least in part, on the new status information, and automatically download the client script (430) to the client computer device (320); and
a web browser running on the client computer device (320) and enabling the client computer device (320) to interface with the web server (310) via the network interface, the web browser, in response to receiving a particular URL, being operative to initially download a monitoring web page (450) from the web server (310), the monitoring web page (450) being a HTML file and defining a visible pane (435) and an invisible pane (440), the web browser being further operative to receive the client script (430) from the web server (310) and to run the client script (430) which updates the display of the client computer device (320) and thereby displays the new status information without a need to reload the full monitoring web page (450);
wherein the invisible pane (440) of the monitoring web page (450) is operative to receive the client script (430), and wherein the visible pane (435) is visible on the display of the client computer device (320) and is updated when the client script (430) is run;
wherein the multipoint control unit interface is further configured to provide control information to the multipoint control unit (205);
wherein the monitoring web page (450) further defines at least one control element, in particular one or more action buttons or push buttons; and
wherein the web browser is further configured to request the web server (310) to send a control action to the multipoint control unit (205) over the multipoint control unit interface when the at least one control element is actuated, the control action being associated with the actuated control element and in particular including actions such as muting a participant, changing the display layout of a video conference, changing the zoom or pan of a participants camera or dropping a participant from the conference.

2. The system of claim 1, wherein the web server (310) includes a COM application (415) and the server script (425) is operative to receive status information from the multipoint control unit (205) in response to placing a call (465) to the COM application (415).

3. The system of claim 1, wherein the network (240) is selected from a group consisting of the internet and intranet.

4. The system of claim 1, wherein the web server (310) includes a COM application (415) and the client computer device (320) includes a control interface and, in response to receiving a control command on the control interface of the client computer device (320), the web browser requests the download of a command web page (410), the command web page (410) including a command server script (425) which when executed, places a call (465) to the COM application (415) running on the web server (310), the COM application (415) being operative to perform the control command.

5. The system of claim 4, wherein if the COM application (415) is successful to perform the control command, an empty web page is downloaded (640) to the client computer device (320).

6. The system of claim 4, wherein if the COM application (415) is not successful to perform the control command, an error web page is downloaded (635) to the client computer device (320).

7. The system of claim 1, wherein the web server (310) has the monitoring web page (450);
wherein the client computer device (320) is operative to continually receive updated information for the monitoring web page (450); and
wherein the server script (425) runs on the web server in the invisible pane and automatically downloads (530) the client script (430) to the invisible pane (440) of the monitoring web page (450) in the client computer device (320).

8. The system of claim 1, wherein the web server (310) includes a COM application (415) and the web browser requests the web server (310) to send a control action to the multipoint control unit (205) by requesting the download of a command ASP page (410) from the web server (310), the command ASP page (410) including a server script (425) with a call (465) to the COM application (415), and the COM application (415), in response to receiving the call (465) from the server script (425) being operative to interface to the multipoint control unit (205) over the multipoint control unit interface.

9. The system of claim 1, wherein the visible pane (435) receives content from a first site and the invisible pane (440) receives content from a second site.

10. The system of claim 1, wherein the web browser is further operative to automatically and continually receive updated data of the monitoring web page (450) from the web server (310) and to update the display with the updated data.

11. The system of claim 1, wherein the client script (430) is smaller than the full monitoring web page (450).

## Patentansprüche

1. System zur Überwachung des Status einer Videokonferenz über ein Netzwerk (240), wobei die Videokonferenz durch ein Videokonferenzsystem bereitgestellt wird, welches eine Multipunkt-Kontrolleinheit (205) umfasst, wobei die Multipunkt-Kontrolleinheit (205) konfiguriert ist die Zuordnung von Konferenzkanälen zu verwalten, um die Video-, Audio-, Kontroll- und Datensignale zu verarbeiten, die während der Videokonferenz ausgetauscht werden, und mehrere Kanäle von den Zugangsanschlüssen (235) zu empfangen, das System umfasst:
einen Webserver (310), der ein Netzwerk-Interface und ein Multipunkt-Kontrolleinheit-Interface umfasst, wobei das Multipunkt-Kontrolleinheit-Interface konfiguriert ist Statusinformationen von der Multipunkt-Kontrolleinheit (205) zu empfangen;
ein Client-Computergerät (320) mit einer Anzeige, welches kommunikativ mit dem Webserver (310) über das Netzwerk-Interface verbunden ist;
ein Server-Skript (425), welches auf dem Webserver (310) in einer kontinuierlichen Schleife abläuft, wobei das Serverskript (425) dazu eingerichtet ist, Statusinformationen von dem Multipunkt-Kontrolleinheit-Interface anzufordern (615) und zu empfangen (620) und wenn die Statusinformationen neu sind, ein Client-Skript (430) zu generieren (525), welches wenigstens in Teilen auf den neuen Statusinformationen basiert und das Client-Skript (430) automatisch auf das Client-Computergerät (320) herunterzuladen; und
ein Webbrowser, der auf dem Client-Computergerät (320) ausgeführt wird und das Client-Computergerät (320) befähigt sich mit dem Webserver (310) über das Netzwerkinterface zu verbinden, wobei der Webbrowser, in Antwort auf den Empfang einer bestimmten URL, tätig wird, um zunächst eine Überwachungs-Webseite (450) vom Webserver (310) herunterzuladen, wobei die Überwachungs-Webseite (450) eine HTML-Datei ist und einen sichtbaren Bereich (435) und einen unsichtbaren Bereich (440) definiert, wobei der Webbrowser des Weiteren dazu eingerichtet ist, das Client-Skript (430) vom Webserver (310) zu empfangen und das Client-Skript (430) ablaufen zu lassen, das die Anzeige des Client-Computergerätes (320) aktualisiert und damit die neuen Statusinformationen anzeigt ohne die gesamte Überwachungs-Webseite (450) neu laden zu müssen;
wobei der unsichtbare Bereich (440) der Überwachungs-Webseite (450) dazu eingerichtet ist, das Client-Skript (430) zu empfangen, und wobei der sichtbare Bereich (435) auf der Anzeige des Client-Computergerätes (320) sichtbar ist und aktualisiert wird, wenn das Client-Skript (430) abläuft;
wobei das Multipunkt-Kontrolleinheit-Interface weiter konfiguriert ist, Kontrollinformation der Multipunkt-Kontrolleinheit (205) bereitzustellen;
wobei die Überwachungs-Webseite (450) des Weiteren wenigstens ein Kontrollelement definiert, insbesondere ein oder mehrere Aktions- oder Druckknöpfe; und
wobei der Webbrowser des Weiteren konfiguriert ist, den Webserver (310) aufzufordern eine Kontroll-Maßnahme über das Multipunkt-Kontrolleinheit-Interface zur Multipunkt-Kontrolleinheit (205) zu senden, wenn das wenigstens eine Kontrollelement betätigt wird, wobei die Kontroll-Maßnahme mit dem betätigten Kontrollelement assoziiert wird und insbesondere Aktionen wie Stummschalten eines Teilnehmers, Ändern des Anzeigenlayouts einer Videokonferenz, Ändern des Zooms oder des Ausschnitts der Kamera eines Teilnehmers oder Ausschließen eines Teilnehmers aus der Konferenz umfasst.

2. System nach Anspruch 1, wobei der Webserver (310) eine COM-Anwendung (415) umfasst und das Server-Skript (425) dazu eingerichtet ist, Statusinformationen von der Multipunkt-Kontrolleinheit (205) zu empfangen in Antwort auf das Tätigen (465) eines Aufrufs der COM-Anwendung (415).

3. System nach Anspruch 1, wobei das Netzwerk (240) aus einer Gruppe bestehend aus dem Internet und Intranet ausgewählt wird.

4. System nach Anspruch 1, wobei der Webserver (310) eine COM-Anwendung (415) umfasst und das Client-Computergerät (320) ein Kontrollinterface umfasst und in Antwort auf den Empfang eines Kontrollkommandos am Kontrollinterface des Client-Computergerätes (320), der Webbrowser das Herunterladen einer Kommando-Webseite (410) anfordert, wobei die Kommando-Webseite (410) ein Kommando-Server-Skript (425) umfasst, welches, wenn es ausgeführt wird, eine COM-Anwendung (415) aufruft (465), die auf dem Webserver (310) abläuft, wobei die COM-Anwendung (415) dazu eingerichtet ist, das Kontrollkommando auszuführen.

5. System nach Anspruch 4, wobei, falls die COM-Anwendung (415) beim Ausführen des Kontrollkommandos erfolgreich ist, eine leere Webseite auf das Client-Computergerät (320) heruntergeladen (640) wird.

6. System nach Anspruch 4, wobei, falls die COM-Anwendung (415) beim Ausführen des Kontrollkommandos nicht erfolgreich ist, eine Fehler-Webseite auf das Client-Computergerät (320) heruntergeladen (635) wird.

7. System nach Anspruch 1, wobei der Webserver (310) eine Überwachungs-Webseite (450) aufweist,
wobei das Client-Computergerät (320) dazu eingerichtet ist, kontinuierlich aktualisierte Informationen von der Überwachungs-Webseite (450) zu empfangen; und
wobei das Server-Skript (425) auf dem Webserver im unsichtbaren Bereich abläuft und automatisch das Client-Skript (430) in den unsichtbaren Bereich (440) der Überwachungs-Webseite (450) im Client-Computergerät (320) herunterlädt (530).

8. System nach Anspruch 1, wobei der Webserver (310) eine COM-Anwendung (415) umfasst und der Webbrowser den Webserver (310) auffordert eine Kontroll-Maßnahme zur Multipunkt-Kontrolleinheit (205) durch Anfordern des Herunterladens einer Kommando-ASP-Seite (410) vom Webserver (310) zu senden, wobei die Kommando-ASP-Seite (410) ein Server-Skript (425) mit einem Aufruf (465) der COM-Anwendung (415) umfasst, und die COM-Anwendung (415) in Antwort auf das Erhalten des Aufrufs (465) vom Serverskript (425) tätig wird, sich mit der Multipunkt-Kontrolleinheit (205) über das Multipunkt-Kontrolleinheit-Interface zu verbinden.

9. System nach Anspruch 1, wobei der sichtbare Bereich (435) Inhalt von einer ersten Seite empfängt und der unsichtbare Bereich (440) Inhalt von einer zweiten Seite empfängt.

10. System nach Anspruch 1, wobei der Webbrowser des Weiteren dazu eingerichtet ist automatisch und kontinuierlich aktualisierte Daten von der Überwachungs-Webseite (450) und dem Webserver (310) zu empfangen und die Anzeige mit den aktualisierten Daten zu aktualisieren.

11. System nach Anspruch 1, wobei das Client-Skript (430) kleiner als die gesamte Überwachungs-Webseite (450) ist.

## Revendications

1. Système pour surveiller l'état d'une vidéoconférence via un réseau (240), la vidéoconférence étant fournie par un système de vidéoconférence qui comprend une unité de contrôle multipoint (205), l'unité de contrôle multipoint (205) étant configurée pour gérer l'assignation de canaux de conférence, pour traiter les signaux vidéo, audio, de contrôle et de données échangés pendant la vidéoconférence et pour recevoir plusieurs canaux depuis des ports d'accès (235), le système comprenant :
un serveur web (310) incluant une interface de réseau et une interface d'unité de contrôle multipoint, l'interface d'unité de contrôle multipoint étant configurée pour recevoir des informations d'état de l'unité de contrôle multipoint (205) ;
un dispositif informatique client (320) présentant un affichage et étant en liaison de communication avec le serveur web (310) par l'intermédiaire de l'interface de réseau ;
un script de serveur (425) s'exécutant sur le serveur web (310) en une boucle continue, le script de serveur (425) étant apte à demander (615) et recevoir (620) des informations d'état de l'interface d'unité de contrôle multipoint et, lorsque l'information d'état est nouvelle, à générer (525) un script de client (430) basé, au moins en partie, sur la nouvelle information d'état et télécharger automatiquement le script de client (430) sur le dispositif informatique client (320) ; et
un navigateur web s'exécutant sur le dispositif informatique client (320) et permettant au dispositif informatique client (320) de communiquer avec le serveur web (310) via l'interface de réseau, le navigateur web étant apte, en réponse à la réception d'une URL particulière, à télécharger initialement une page web de surveillance (450) depuis le serveur web (310), la page web de surveillance (450) étant un fichier HTML et définissant un volet visible (435) et un volet invisible (440), le navigateur web étant en outre apte à recevoir le script de client (430) du serveur web (310) et à exécuter le script de client (430) qui met à jour l'affichage du dispositif informatique client (320) et affiche ainsi la nouvelle information d'état sans qu'il soit nécessaire de recharger la page web de surveillance (450) complète ;
le volet invisible (440) de la page web de surveillance (450) étant apte à recevoir le script de client (430) et le volet visible (435) étant visible sur l'affichage du dispositif informatique client (320) et mis à jour lorsque le script de client (430) est exécuté ;
l'interface d'unité de contrôle multipoint étant en outre configurée pour fournir des informations de contrôle à l'unité de contrôle multipoint (205) ;
la page web de surveillance (450) définissant en outre au moins un élément de contrôle, en particulier un ou plusieurs boutons d'action ou boutons poussoirs ; et
le navigateur web étant en outre configuré pour demander au serveur web (310) d'envoyer une action de contrôle à l'unité de contrôle multipoint (205) via l'interface d'unité de contrôle multipoint lorsque ledit au moins un élément de contrôle est actionné, l'action de contrôle étant associée à l'élément de contrôle actionné et incluant en particulier des actions telles que mettre un participant en sourdine ou en mode silencieux, changer la disposition de l'affichage d'une vidéoconférence, changer les options de zoom ou de panoramique de la caméra d'un participant ou écarter un participant de la conférence.

2. Système selon la revendication 1, dans lequel le serveur web (310) inclut une application COM (415) et le script de serveur (425) est apte à recevoir une information d'état de l'unité de contrôle multipoint (205) en réponse un appel (465) passé à l'application COM (415).

3. Système selon la revendication 1, dans lequel le réseau (240) est sélectionné dans un groupe constitué de l'internet et d'un intranet.

4. Système selon la revendication 1, dans lequel le serveur web (310) inclut une application COM (415) et le dispositif informatique client (320) inclut une interface de contrôle et, en réponse à la réception d'une commande de contrôle sur l'interface de contrôle du dispositif informatique client (320), le navigateur web demande le téléchargement d'une page web de commande (410), la page web de commande (410) incluant un script de serveur de commande (425) qui, lorsqu'il est exécuté, passe un appel (465) à l'application COM (415) s'exécutant sur le serveur web (310), l'application COM (415) étant apte à effectuer la commande de contrôle.

5. Système selon la revendication 4, dans lequel, si l'application COM (415) effectue la commande de contrôle avec succès, une page web vide est téléchargée (640) sur le dispositif informatique client (320).

6. Système selon la revendication 4, dans lequel, si l'application COM (415) n'effectue pas la commande de contrôle avec succès, une page web d'erreur est téléchargée (635) sur le dispositif informatique client (320).

7. Système selon la revendication 1, dans lequel le serveur web (310) présente la page web de surveillance (450) ;
dans lequel le dispositif informatique client (320) est apte à recevoir continuellement des informations mises à jour pour la page web de surveillance (450) ; et
dans lequel le script de serveur (425) s'exécuter sur le serveur web dans le volet invisible et télécharge automatiquement (530) le script de client (430) sur le volet invisible (440) de la page web de surveillance (450) dans le dispositif informatique client (320).

8. Système selon la revendication 1, dans lequel le serveur web (310) inclut une application COM (415) et le navigateur web demande au serveur web (310) d'envoyer une action de contrôle à l'unité de contrôle multipoint (205) en demandant le téléchargement d'une page ASP de commande (410) depuis le serveur web (310), la page ASP de commande (410) incluant un script de serveur (425) avec un appel (465) à l'application COM (415), et l'application COM (415) étant apte, en réponse à la réception de l'appel (465) du script de serveur (425), à communiquer avec l'unité de contrôle multipoint (205) via l'interface d'unité de contrôle multipoint.

9. Système selon la revendication 1, dans lequel le volet visible (435) reçoit du contenu d'un premier site et le volet invisible (440) reçoit du contenu d'un second site.

10. Système selon la revendication 1, dans lequel le navigateur web est en outre apte à recevoir automatiquement et continuellement des données mises à jour de la page web de surveillance (450) depuis le serveur web (310) et de mettre à jour l'affichage avec les données mises à jour.

11. Système selon la revendication 1, dans lequel le script de client (430) est plus petit que la page web de surveillance (450) complète.
